# EUROPEAN PATENT SPECIFICATION

(11) **EP 4 010 116 B1**
(45) Date of publication and mention of the grant of the patent: **07.05.2025**
(21) Application number: 20746997.4
(22) Date of filing: 03.08.2020
(51) Int. Cl.: B01L 3/00, B01L 9/06

(54) **FLUID CONTAINER COVER**
FLÜSSIGKEITSBEHÄLTERABDECKUNG
COUVERCLE DE RÉCIPIENT DE FLUIDE

(30) Priority: 05.08.2019 EP 19190081
(43) Date of publication of application: 15.06.2022
(73) Proprietor: TECAN Trading AG, 8708 Männedorf (CH)
(72) Inventor: OTT, Philipp, 8496 Steg (CH); SAGER, Adrian, 8708 Männedorf (CH); BRANDEN, Lars Johan, 8630 Rüti (CH)
(74) Representative: Troesch Scheidegger Werner AG
(86) International application number: PCT/EP2020/071832
(87) International publication number: WO 2021/023722

(56) References cited:
- WO-A1-2017/082895
- WO-A1-2017/093048
- US-A1- 2004 018 120
- US-A1- 2013 327 688
- US-A1- 2015 164 744
- US-A1- 2016 003 861
- US-A1- 2016 054 202
- US-A1- 2018 353 954
- US-A1- 2019 046 406
- US-A1- 2019 201 888

## Description

### TECHNICAL FIELD OF THE INVENTION

The current invention relates to fluid container covers, particularly to contamination prevention covers or caps for containers for pharmaceutical, biotechnology, and laboratory liquid transfer applications. Such container can be tubes, vials, bottles, carboys or the like.

### DESCRIPTION OF THE RELATED ART

Known embodiments of such container covers or closures are used in the field of liquid handling. In this field, liquid handling tubes of different volume capacities are often used. In particular in the handling of liquids with biological material, such tubes are preferably plastic tubes for single use, as they help reducing the risk of contaminations with the biological material being involved. Routinely used liquid handling tubes are for example 1.5 ml, 15 ml, and 50 ml plastic tubes. Such liquid handling tubes are usually closable with a snap-on lid or with a screw cap. Lids or caps are required to avoid contamination of the sample within the respective tubes by surrounding particles or other contaminants. Their use is originally adapted for laboratory staff working on a laboratory bench, which are trained to apply a particular care also in the opening and closing process for avoiding such contaminations. However, the handling of lids or caps often difficult in liquid handling automation. There have been efforts in automating de- and recapping such liquid handling tubes, in particular of tubes comprising screw caps, however, the solutions are complicated and may still include a risk of contamination of the samples.

Document D1: US2019/201888A1 discloses: a cover for a fluid container comprising a plane cover plate and at least two ports, wherein each port comprises a through channel, a fluid impermeable first membrane, a gas permeable second membrane and an aspiration tube.

Document D2: US2019/046406A1 discloses a cover for a fluid container comprising a plane cover plate and at least two ports, wherein each port comprises a through channel, a fluid impermeable first membrane and a gas permeable second membrane.

Document D3: WO2017/082895A1 discloses a cover for a fluid container comprising a gas permeable membrane; and at least two ports, each of them comprising a through channel.

### SUMMARY OF THE INVENTION

In the current invention, a problem to be solved is the provision of a cover for containers that reduces the risk of contamination during liquid handling processes, i.e. during the dispensing, aspirating, mixing, separating, reacting of liquids in a container, alone or in combination with gases and/or solids.

This problem is solved by a cover with the features of claim 1. Further embodiments of the cover, of a set comprising such a cover and a container, a filling quantity measurement arrangement comprising such a set and measuring reception, as well as a method for determining the filling quantity of a fluid container with such a cover are defined by the features of further claims.

A cover for a fluid container according to the invention comprises an essentially plane cover plate for closing an opening of a fluid container and at least two ports. Each port comprises a trough channel extending through the entire thickness of the cover plate. A fluid impermeable first membrane is arranged over the entire cross section of the through channel of the first port and an at least gas permeable second membrane is arranged over the entire cross section of the through channel of the second port. The cover also comprises a holding plate which is arranged on the inner side of the cover plate, wherein the first and/or second membranes are clamped between the cover plate and the holding plate and wherein the holding plate comprises through channels that are aligned with the corresponding through channels of the cover plate, and an aspiration tube which is provided on a side of the holding plate facing away from the cover plate, extending from the holding plate, forming an extension of the through channel of the holding plate that is aligned with the through channel of the first port of the cover plate. With such a design, the risk of contamination is greatly reduced, ideally totally prevented. The cover plate can be made from polypropylene, which may be autoclaved at 15 PSI and 121°C (250°F) for 20 minutes. The first membrane can be a pierceable septum. Such a pierceable septum can be made from silicone, a thermoplastic elastomer, an aluminum foil or a polypropylene foil, for example, or a combination thereof. The first membrane may be configured to allow for a piercable opening of the membrane but also if desired a re-closure of the membrane after the opening by the pipette tip, in that the membrane attaches to the pipette tip and functions there as a seal. Such a seal function may be desired for example to better control the pressure to be applied for aspirating or dispensing through the first membrane, and may be particularly desired in case an aspiration tube is used as a tip elongation, as discussed below.

It may be provided that the first membrane is for example configured being pierceable by an aspirator and/or by a dispenser. A suitable aspirator or a suitable dispenser may for example be a pipette tip known in the field of automated or manual liquid handling, and which may be used for aspirating and/or dispensing a fluid. The term pipette tip may be used interchangeably with the term aspirator and dispenser.

A suitable pipette tip may for example be a disposable pipette tip made of a plastic material, or a so-called fixed pipette tip, made of a metal, or a so-called semi-disposable pipette tip.

In the context of the present invention, a disposable pipette tip is a pipette tip which may be taken up and/or ejected for example by a liquid handling device automatically. It may be made of a plastic material, and the connection to the liquid handling device may for example be realized by slightly deforming the plastic to achieve a friction fit connection between the tip and the device. Other connections technologies for functionally connecting a (disposable) pipette tip to a liquid handling device are possible, too.

In the context of the present invention, a fixed pipette tip may be connected to the liquid handling device mechanically by form fit, for example may be screwed to the device. Mounting and dismounting typically requires a manual interaction. A fixed pipette tip may be made of a metal to ensure a stable shape.

In the context of the present invention, a semi-disposable pipette tip is a pipette tip which may be made of metal but which has an outer geometry substantially the same as disposable tips made of plastic. The semi-disposable tips are taken up and/or ejected for placing them back or for placing them in a wash station for cleaning and re-use.

Liquid handing devices which may be suitable for handling fluids or liquids in the context of a cover according to the present invention are for example a handheld pipette or a pipette of a liquid handling workstation.

A handheld pipette (or also called pipettor) is configured for the manual or at least semi-automatic use by a laboratory staff. A liquid handling workstation allows performing liquid handling steps essentially automatically. This has the advantage that a high number of samples may be treated in an accurate way with consistent quality and specificity. Liquid handling workstations are typically under the control of one or more controller, which control for example a pipetting robot, the liquids used, steps of aspirating, dispensing, mixing or other pipetting steps by a pipetting head, movements of pipettes, containers, etc.

It may be provided that the first membrane comprises one or more slits which enable or simplify the piercing of the first membrane for example by a disposable tip. In the case a fixed tip is used, a slit may not be necessary.

Thus, the fluid impermeable first membrane may provide a possibility to carry out a liquid handling process with a fluid or sample in a fluid container onto which the cover according to the invention is placed on, without the need of de- or recapping the fluid container. This is for example particularly suitable in the context of liquid handling automation. The cover of the present invention furthermore may in addition provide protection for the users when working with dangerous fluids or samples.

In one embodiment, the second membrane is permeable for gas and liquid. Such second membranes that are permeable for gas or gas and liquid can be designed as a mesh, a webbing, a fleece or the like. Such second membranes can be made from a hydrophilic, non-binding polyether sulfone. Such second membranes can have a mesh size, respectively a pore size of about 0.2 micrometers.

A gas permeability of the second membrane may particularly suitable for providing a pressure compensation when for example a pipette tip is inserted through the first membrane and a fluid or a liquid is to be pipetted through the cover by means of the pipette tip. A pressure compensation may be required for example during an aspiration, which may cause the generation of a negative pressure in a container onto which the cover is placed, or during a dispense, which may cause a positive pressure in such a container.

For increasing the gas exchange, it may be provided to use a membrane with an expanded surface area, for example a membrane which is upfolded.

A liquid permeability of the second membrane may be desired for example to provide a filter or purification effect. A filter effect may for example be desired for separating solid particles from a liquid which is to be pipetted, as it is often used for example for sterile filtering. A filtering effect may alternatively or additionally be provided by a coating present on the second membrane which allows for example the retention of selected particles. Such a functionalization of the membrane may additionally be connected with an indicator, for example a color change, which indicates the presence or binding of such a selected particle.

A second membrane which is gas and liquid permeable is for example particularly suitable from an economic view concerning space or function. Having a port which is permeable for gas and liquid may allow to waive the necessity of a mere gas permeable port for providing a pressure exchange. A gas and liquid permeable membrane in a port may provide both, the pressure exchange function but in addition an inlet/outlet for a liquid.

In the context of the present invention, a fluid may be any type of liquid or gas, for example a liquid sample, a reagent, a buffer, etc. The fluid may also be a mixture of different liquids (e.g. an emulsion), a mixture of different gases, a mixture of a liquid and a gas (i.e. an aerosol), or a mixture of a liquid and a solid dispensed in said liquid (i.e. a suspension). Solid particles may for example be abrasive particles such a sand, or may be magnetic beads or cells. The liquid may also be a solvent for molecules of interest.

In one embodiment, a collar is provided on the circumference of the second port on an outer side of the cover plate, extending essentially perpendicular to the cover plate. Ideally, the cover plate and the collar are formed integrally in a single piece, e.g. by injection molding.

A collar for the second port or for any other of the ports mentioned herein may be particularly useful for example for guiding an aspirator and/or a dispenser into a suitable position when for example a fluid shall be pipetted through the cover. A collar may further be useful for example to provide a structure for one or more fastening elements, such as a Luer-lock connector or other connection elements, as also mentioned exemplarily herein. Other fastening elements for allowing the attachment of a liquid line may be possible, for example elements for a single-use attachment, to irreversibly attach a liquid line such as a tube, a syringe or a liquid container. Magnetically activatable fastening elements may be possible, too. A fastening element in connection with a collar may be provided for any one of the ports mentioned herein, and in any suitable combination.

In one embodiment, the exterior surface of the collar of the second port is conical as such that the outer dimensions of the cross section of the collar decrease with an increasing distance from the cover plate. For example, the exterior surface of the collar can have the shape of a Luer-cone.

In one embodiment, the interior surface of the collar of the second port is conical as such that the inner dimensions of the cross section of the collar increase with an increasing distance from the cover plate. For example, the interior surface of the collar can have the shape of a Luer-cone.

It may be provided that the interior surface is configured being adapted complementary to the outer surface and shape of a pipette tip. It may be further provided in particular that the shape of the interior surface of the collar is adapted to the shape and dimension of a disposable pipette tip, in particular to the pipetting end. This may be suitable when using a pipette tip during a liquid handling step which involves the use of the cover. For example, a respective pipette tip is inserted into the collar until the pipette tip is sealingly inserted into the cover. In this way, a fluid may be dispensed by applying positive pressure by a liquid handling device through the second membrane, for example into a fluid container onto which the cover is placed.

In one embodiment, a fastening element is provided on the exterior surface of the collar of the second port. Such a fastening element can be a bulge, a latch, a notch or a thread. For example, the fastening element can a thread that is compatible with a Luer-Lock-System.

In one embodiment, a shoulder is formed in the through channel of the second port, the shoulder being flush with an outer surface of the cover plate.

The shoulder on the inside of the collar of the second port or of any other ports mentioned herein may provide a restriction of the insertion depth. It may be in this case provided that the dimension and shape of the shoulder is adapted to a pipetting end of a pipette tip which shall be used for example for dispensing in connection with the second port. It may be further provided in such an embodiment that a further second port is present in the cover which comprises an at least gas permeable membrane for allowing a pressure compensation during a dispense step, when the cover is placed for example onto a fluid container.

In one embodiment, a third port with a through channel, extending through the entire thickness of the cover plate is provided, wherein the third port is membrane-free.

The provision of a membrane-free third port may be suitable for example when for pipetting a fluid of a fluid container, a long pipette tip shall be used. For example, the so-called fixed pipette tip may have a greater length and a smaller diameter compared to conventional disposable pipette tips, allowing the insertion of such a fixed tip through the third port for example into a fluid container onto which the cover is placed. Due to the greater length it may be possible for example to easily insert such a fixed pipette tip for aspirating a fluid at differing depths within the fluid container.

The provision of a membrane-free third port may provide a possibility to use with this port an individual, specific membrane which is for example required for a specific application, as mentioned later.

In one embodiment, a collar is provided on the circumference of the third port on an outer side of the cover plate, extending essentially perpendicular to the cover plate.

In one embodiment, the exterior surface of the collar of the third port is conical as such that the outer dimensions of the cross section of the collar decrease with an increasing distance from the cover plate. For example, the exterior surface of the collar can have the shape of a Luer-cone.

In one embodiment, the interior surface of the collar of the third port is conical as such that the inner dimensions of the cross section of the collar increase with an increasing distance from the cover plate. For example, the interior surface of the collar can have the shape of a Luer-cone.

In one embodiment, a fastening element is provided on the exterior surface of the collar of the third port. Such a fastening element can be a bulge, a latch, a notch or a thread. For example, the fastening element can a thread that is compatible with a Luer-Lock-System.

It may thus be provided to use for example a Luer-Lock System for connecting a sterile filter or other types of membranes to the third port using a standardized connection system. This may allow the use of an individual membrane which is required for a distinct application to be carried out. It may further be provided to connect for example an adapter-like structure to a correspondingly configured collar to provide a connection element adapted to a specific type of aspirator and/or dispenser, for example.

In one embodiment, a shoulder is formed in the through channel of the third port, the shoulder being flush with the outer surface of the cover plate.

In one embodiment, a holding plate is arranged on the inner side of the cover plate, wherein the first and/or second membranes are clamped between the cover plate and the holding plate and wherein the holding plate comprises through channels that are aligned with the corresponding through channels of the cover plate.

In one embodiment, the diameter of each through channel of the holding plate is the same size as or is smaller than the corresponding diameter of the through channel of the cover plate.

In one embodiment, a shoulder is formed in the through channel of the holding plate, on a channel end which is facing the cover plate.

In one embodiment, a funnel is formed in the through channel of the holding plate that is aligned with the through channel of the second port of the cover plate, on a channel end which is facing the cover plate.

In one embodiment, an aspiration tube is provided on a side of the holding plate facing away from the cove plate, extending from the holding plate, forming an extension of the through channel of the holding plate that is aligned with the through channel of the first port of the cover plate. For example, the aspiration tube is made from the same material as the cover plate. Alternatively, the aspiration tube may be made from a different material, for example from an electrically conductive material, in case the aspiration tube shall be used as an electroconductive material as mentioned below.

The length of the aspiration tube can be designed as such, that in the assembled state with the fluid container, a free end of the aspiration tube, facing away from the holding plate, touches a bottom surface of the fluid container, at least partially.

The holding plate and the aspiration tube can be formed integrally in one piece.

The cover plate and the holding plate can be formed integrally in one piece. For example, the first and second membranes can be inserted in the casting mold before the cover plate and the holding plate are created simultaneously during injection molding.

It may be provided that the aspiration tube is configured to receive a pipette tip which is introduced via the first port through the cover. The aspiration tube may be adapted in this case to the dimension and shape of the pipette tip. Accordingly, the aspiration tube may be configured as an elongated hollow body which extends essentially along a central axis, or which defines itself by its length expansion a central axis. The aspiration tube may in this case provide a guiding structure for a pipette tip.

If in this case the pipette tip is a so-called fixed pipette tip it may be provided that the aspiration tube is configured to allow the insertion of the fixed pipette tip just up to a free end of the aspiration tube which faces away from the holding plate or even slightly projection out of said free end. This might allow the pipetting of a fluid using a pipette tip, with the aspiration tube guiding the used pipette tip.

If in the case the pipette tip is a so-called disposable pipette tip or a tip with similar outer geometry it may be provided that the aspiration tube is configured to receive merely a distal part of the disposable pipette tip, thereby functioning as an elongation of the disposable pipette tip. This would allow for example the aspiration of a fluid by an inserted pipette tip through the free end of the aspiration tube which faces away from the holding plate.

It may also be provided that the aspiration tube is configured to receive parts of a structure which differs from a mere pipette tip, for example a structure which provides further functions to the aspiration tube. For example, the aspiration tube may be configured to receive a (part of a) heating element, enabling the aspiration tube to provide heat into a solution present in a fluid container onto which the cover is placed on.

In one embodiment, at least one recess is formed in the aspiration tube on its free end facing away from the holding plate. As such, in the assembled state of the cover with the container, at least one lateral opening is provided between the tip of the aspiration tube and the bottom of the container, when the cover is placed onto such a container.

For example, several recesses can be formed in the aspiration tube. They can be equally distributed at the tip's circumference.

Through the at least one or more recesses, a fluid may then for example be aspirated almost completely from the bottom of the container via a pipette tip which is introduced through the first port into the aspiration tube.

In one embodiment, a closed side wall which extends a multiple of the thickness of the cover plate from the circumference of the cover plate is provided. The side wall extends essentially perpendicular to the cover plate. The side wall can also extend at an angle with respect to the cover plate. For example, the cover plate and the side wall are formed integrally in one piece. In the assembled state, the side wall can be arranged on the outside of the container and forming a cap-style cover, or the side wall can be arranged on the inside of the container and forming a plug-style cover. For cap-style covers, the side wall can comprise slots that extend perpendicular to the cover plate, over at least a part of the height of the side wall. Alternatively, the side wall is not closed, i.e. comprises clips that extend essentially perpendicular to the cover plate.

In one embodiment, a fastening element provided on the inward facing surface of the side wall is provided. This fastening element can be part of a fastening system for single or multiple use. Meaning, the cover is designed for single or multiple use. Such a fastening element can be a bulge, a latch, a notch or a thread. For example, the side wall and the fastening element are formed integrally in one piece.

In one embodiment, one first port and two or more second ports are provided, wherein the two or more second ports are identical or different. The second ports can be different in shape or size. For example, small ports and bigger ports can be provided or ports with or without fastening elements can be provided.

In one embodiment, a gas permeable second membrane is arranged in at least one of the second ports and a gas and liquid permeable second membrane is arranged in at least one of the second ports. The second membranes can be separate from one another or they can be connected to one another with a common carrier. Alternatively, all second membranes can be formed integrally in one piece. This is possible with all second membranes being identical or with different second membranes. For example, a gas and liquid permeable second membrane can be coated partially to render the second membrane liquid impermeable in the coated areas. Alternatively, different second membranes can be connected to each other by means of an adhesive. It is also possible to create a single piece membrane with different properties in different areas, i.e. by a difference in the density of the meshing.

In one embodiment, the cover is designed as a plug that is inserted at least partially in the chamber of the container. A side wall is provided at the circumference of the outside surface of the cover plate. The side wall extends essentially perpendicular to the cover plate. Alternatively, the side wall is conical, wherein the outside diameter is reduced with an increasing distance to the cover plate. The plug-type cover can be thin-walled or full body.

The features of the above-mentioned embodiments of the cover can be used in any combination, unless they contradict each other.

A set according to the invention comprises a cover according to one of the preceding embodiments and at least one fluid container with at least one chamber for receiving fluids, wherein the cover is arranged as such that it completely covers at least one opening of the at least one fluid container. The cover can be fixed to the container by means of the fastening element. The container can be a test tube, a vial, a centrifuge tube, a conical centrifuge tube or any other known pharmaceutical, biotechnology or laboratory container. The container can have a single chamber or can have several chambers for receiving fluids. These multiple chambers can be formed in a common container body. Alternatively, several containers can be arranged in a rack and a common cover is arranged on all these containers. Accordingly, the cover comprises several first and second ports or first second and third ports that, in the assembled state, are aligned with the chambers or the containers. All first ports can be identical, or they can have different sizes or different first membranes. All second ports can be identical or can have different shapes, sizes or second membranes, as described above. The same is applicable for the third ports.

The cover may comprise a single aspiration tube or may comprise at least one aspiration tube for each container which shall be covered. The aspiration tube may extend by a length into the container, reaching either up to the bottom of the container or reaching only partly into the container.

A filling quantity measurement arrangement according to the invention comprises a reception, a fluid container with a cover according to one of the previous embodiments, wherein the cover comprises the aspiration tube and an evaluation unit, wherein the aspiration tube of the cover reaches into the container. The evaluation unit is electro conductively connected to the aspiration tube and the reception. The evaluation unit is adapted to determine the filling quantity in the container based on the measured capacitance between the reception and the aspiration tube. In such an embodiment, the aspiration tube is made from an electroconductive material, for example, from an electroconductive polypropylene. The cover plate and or the side wall of the cover can be made from the same material and all parts can be electro conductively connected. Alternatively, an electrical contact can be arranged on the outside of the cover, the electrical contact being electro conductively connected to the aspiration tube.

A method for determining the filling quantity of a fluid container according to the invention comprises the steps of:
- providing a reception for a non-conductive fluid container and an evaluation unit that is electro conductively connected to the reception;
- arranging a non-conductive fluid container in the reception, wherein a cover according to one of the preceding embodiments where the cover comprises the electro conductive aspiration tube that reaches into the container, is arranged on the fluid container;
- connecting the evaluation unit electro conductively with the aspiration tube;
- measuring the capacitance between the reception and the aspiration tube;
- determining the filling quantity of the fluid container by evaluating the measured capacitance.

The method allows an improved control of the quantity of a fluid present in a fluid container, which may be of particular interest for example during the process of aspirating a fluid out of the fluid container and/or dispensing a fluid into the fluid container.

Another aspect of the invention concerns a method of pipetting a fluid. The method comprises the following steps:
- providing a cover according to one of the embodiments as described above and at least one fluid container. The cover is arranged as such that it completely covers at least one opening of the at least one fluid container;
- inserting an aspirator or a dispenser into the at least one fluid container by piercing the fluid-impermeable first membrane; and
- pipetting a fluid into the fluid container or out of the fluid container using the aspirator or the dispenser without removing the cover from the at least one fluid container.

It is an advantage of using a cover as defined above that there is no need to remove such a cover from a fluid container for handling a fluid. This reduces the risk of carry over between different samples, improves sterility if required, minimizes evaporation effects, and/or increases the protection of a user when working with hazardous material.

It may be provided that the membranes present in the ports are configured in a manner that the aspirator or the dispenser is inserted through the respective membrane and through the cover. However, the membrane(s) may be positioned within the cover with an offset, so that an aspirator or a dispenser may penetrate completely the membrane but not necessarily completely the height of the cover.

It may be provided in the case, where a disposable pipette tip is used as an aspirator 5 or a dispenser 6, that an aspiration tube is provided which is functionally connected to the first membrane, or the first port, respectively, according to an embodiment or a combination of embodiments as discussed above.

In one embodiment, the fluid is dispensed into the fluid container using a second port or a third port, and/or the fluid is aspirated from the fluid container using the first port and/or the third port, as exemplarily described above.

In one embodiment, the aspirator is selected from a group comprising a fixed pipette tip and a disposable pipette tip, and the dispenser is selected from a group comprising a fixed pipette tip and a disposable pipette tip.

In one embodiment, the pipetting of a fluid is under the control of liquid handling device, the liquid handling device being selected from a group comprising an automated liquid handling workstation and a handheld pipette.

To mention exemplarily, a cover of the invention may be used with a fluid container as a type of micro-bioreactor. The fluid container may for example be configured for culturing cells therein. Such cells may be for example prokaryotic cells such as bacterial cells or eukaryotic cells such as plant cells, animal cells including human cells or fungal cells. For cell culturing, the required culture medium may be aspirated and/or dispensed using the different ports provided in the cover. Test substances may be also be aspirated and/or dispensed using the different ports, as well as samples extracted for monitoring the culture. For these pipetting steps, the cover may be adapted with respect to the present ports and membranes and/or a present aspiration tube as desired, and further for example to allow an adequate gas and/or humidity exchange.

In alternative embodiments, the cover may be configured to be used with a fluid container as a type of micro-bioreactor for producing for example biomolecules, with or without an enzymatically cleavable tag, for example, or for producing other types of molecules such as cytokines or others. The cover may be configured to link two or more fluid containers, each having a different function, to generate a desired workflow.

Also exemplarily mentioned is the use of magnetic bead separation with a cover of the invention placed onto a fluid container. For example, freely circulating tumor cells or immune cells may be extracted from a blood serum sample for downstream analyses using magnetic beads in the correspondingly adapted set of cover and fluid container. The magnetic beads are for example coated with corresponding functional groups for selectively binding the target cells. After a binding reaction, the magnetic beads may be concentrated on one side of the fluid container using an external magnet. The supernatant may then be aspirated through the cover for example by use of the aspiration tube, by means of a disposable pipette tip or a fixed tip under the control of a liquid handling device. The required pipetting steps in the context of washing the beads and/or eluting bound target cells may further be carried out by using the provided ports in the cover.

Further suitable uses of a cover for a fluid container according to the invention are for example liquid-liquid extraction, which may involve the control of the phase boundary by the use of a measured capacitance between an electrically conductive aspiration tube and the reception as described above. It may be provided that the aspiration tube itself is further adapted to the design of an experiment which shall be carried out; to mention exemplarily, the aspiration tube may comprise at its inner side an extraction layer for specifically binding a substance.

### BRIEF DESCRIPTION OF THE DRAWINGS

Embodiments of the current invention are described in more detail in the following with reference to the figures. These are for illustrative purposes only and are not to be construed as limiting. It shows
Fig. 1 a perspective view from above of a cover according to the invention, arranged above a container;
Fig. 2 a perspective view from below of the free end of the aspiration tube of the cover from Figure 1;
Fig. 3A a perspective view from above of a minimal embodiment of a cover according to the invention;
Fig. 3B a perspective view from below of the cover from Figure 3A;
Fig. 4 a section view of the cover of Figures 3A and 3B through its first and second port;
Fig. 5 a section view of the cover of Figure 1 through its first, second and third port;
Fig. 6 a perspective exploded view of the cover of Figure 1;
Fig. 7 a section view of the holding plate of Figures 5 and 6;
Fig. 8 a perspective view from above of the cover of Figure 1 with an aspirator arranged above the first port, with dispenser arranged at the second port and with a filter arranged at the third port;
Fig. 9 a section view of the cover of Figure 1 on a container, arranged in a reception;
Fig. 10 a section view of a plug-type cover through its first, second and third port;
Fig. 11 a perspective explosion view from above of a multi-chamber container with a corresponding cover;
Fig. 12 a perspective explosion view from above of a multi-chamber container with an alternative embodiment of a corresponding cover;
Fig. 13 a perspective view of a liquid handling device functionally connected to liquid container by a corresponding cover, and
Fig. 14 a schematic diagram of method steps of pipetting a fluid.

### DETAILED DESCRIPTION OF THE INVENTION

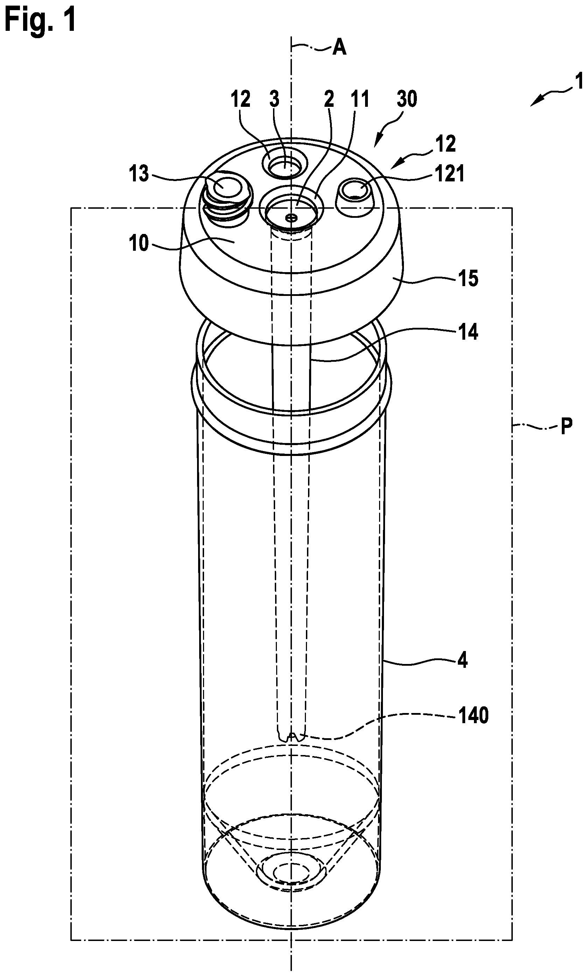

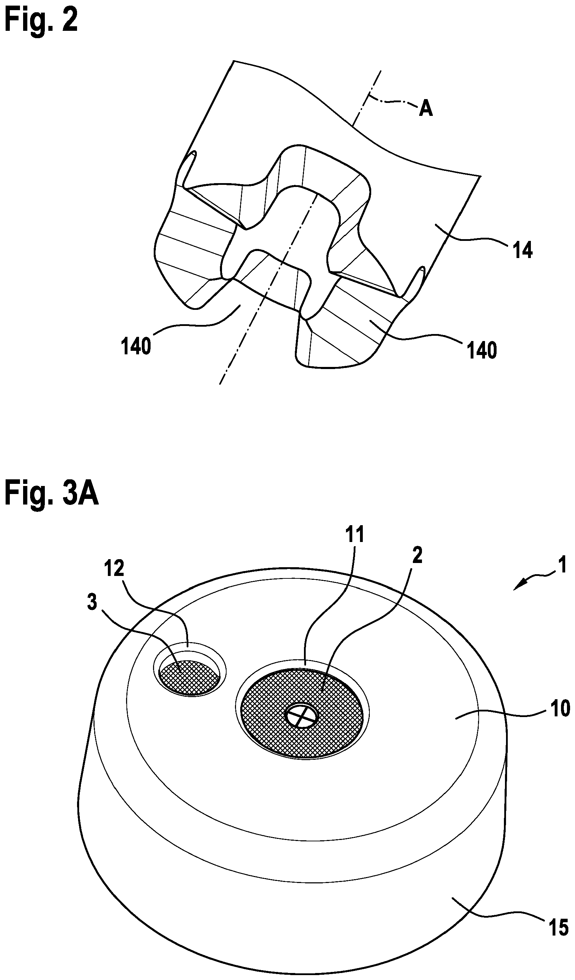

Figure 1 shows a perspective view from above of a cover 1 according to the invention, arranged above a container 4. The cover comprises an essentially plane cover plate 10, that extends over the entire cross-section of the opening of the container 4. A first port 11 is arranged in the center of the cover plate 10 that has a shape of a circular disk. The opening of the first port 11 is completely closed by a non-permeable first membrane 2. The depicted first membrane is a pierceable septum. Adjacent to the first port 11, two second ports 12 are arranged. In this figure, the second port 12 on the right comprises a collar 121. The second port 12 in the back is collarless. The opening of the second port 12 in the back is completely closed by a gas-permeable second membrane 3. The opening of the second port 12 on the right, although not shown in this figure, is completely closed by a gas and liquid permeable second membrane 30. Adjacent to the first port 11, a third port 13 is arranged. A closed side wall 15 extends from the circumference of the cover plate 10 on the opposite side of the ports 11,12,13 over a multiple of the thickness of the cover plate 10 in the direction of a central axis A. Aligned with the first port 11, a aspiration tube 14 is provided on the side of the cover plate 10, opposite to the ports 11,12,13. The aspiration tube 14 extending over a multiple of the height of the side wall 15 of the cover 1, along the central axis A. Recesses 140 are formed on the free end of the aspiration tube 14, facing away from the cover plate 10, as depicted in Figure 2. There are four recesses 140 equally distributed around the circumference of the free end of the aspiration tube 14.

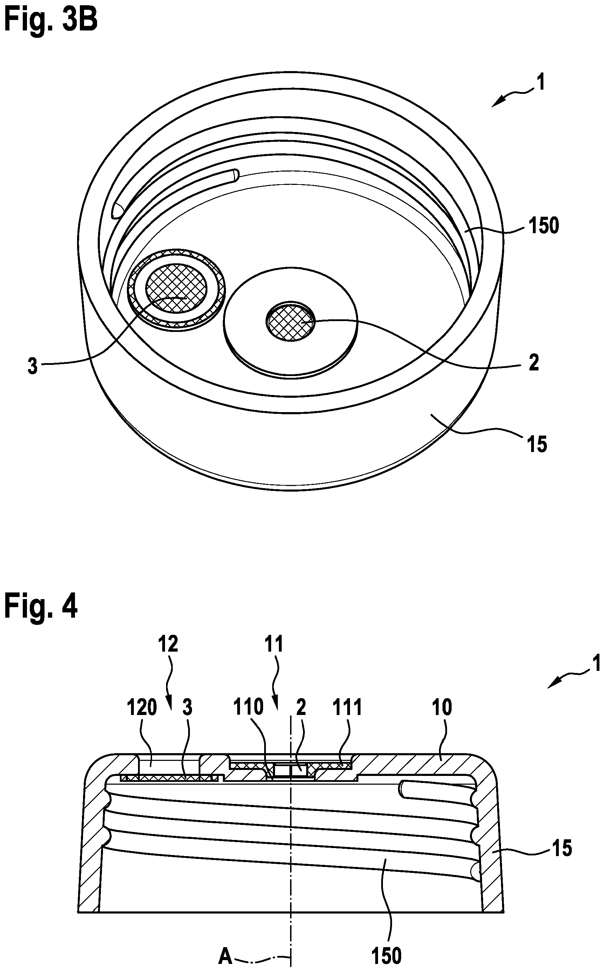

Figure 3A shows a perspective view from above of a minimal embodiment of a cover 1 according to the invention, Figure 3B shows a perspective view from below thereof and Figure 4 shows a section view of the cover through its first and second ports 11,12. In this embodiment, the cover comprises a cover plate 10 with a first port 11 and a second port 12. The first membrane 2 completely closes the opening of the first port 11, i.e. the first membrane 2 is arranged over the whole width of the through channel 110 of the first port 11. The first membrane 2 is arranged on a shoulder 111 in a recess of the cover plate 10. The first membrane 2 can be glued to the shoulder 111. The recess or the shoulder 111 being accessible from the outside of the cover 1. A second membrane 3 completely closes the opening of the second port 12, i.e. the second membrane 3 is arranged over the whole width of the through channel 120 of the second port. The second membrane 3 being arranged on the inside of the cover plate 10. The second membrane 3 can be attached to the inside of the cover plate 10 by vibration welding. A thread 150 is provided on the inside of the closed side wall 15 enabling the cover 1 to be screwed on a container with a complementary thread.

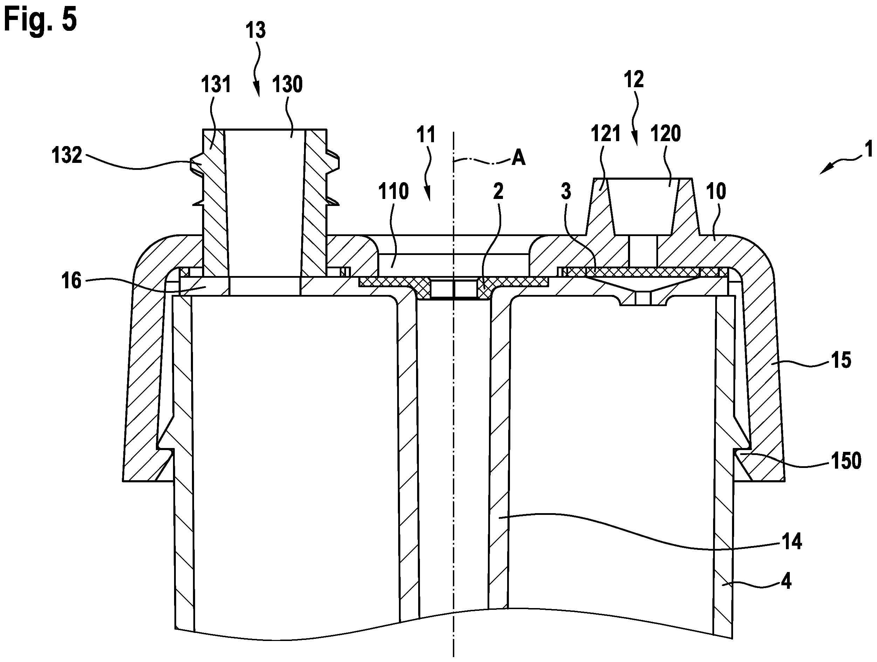

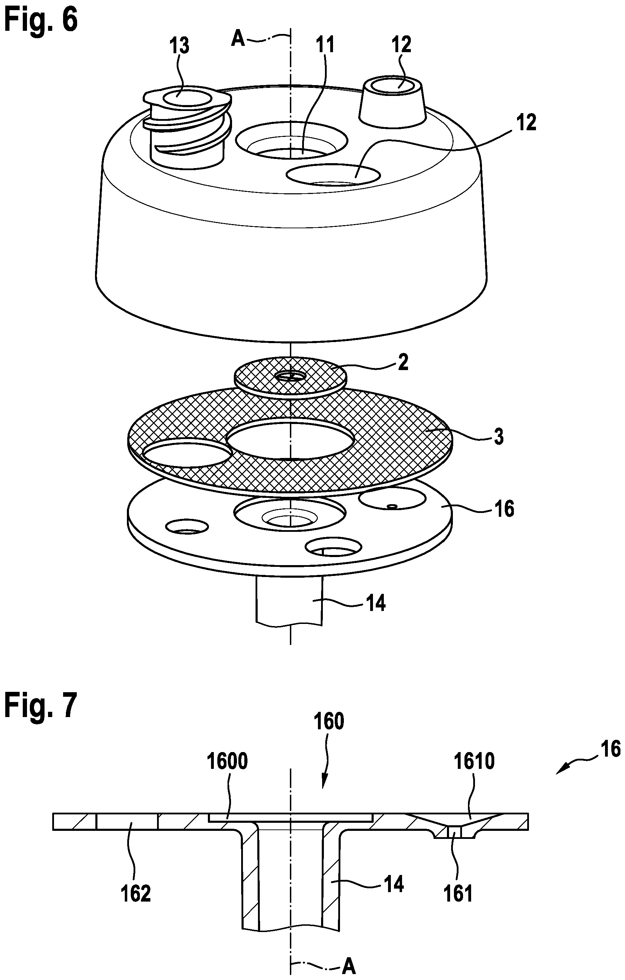

Fig. 5 a section view of the cover 1 of Figure 1 through its first port 11, its second port 12 and its third port 13, i.e. through the plane P of Figure 1. Figure 6 shows a perspective exploded view of the cover 1 of Figure 1. In contrast to Figure 1, in Figure 5, the cover 1 is arranged on the container 4. In the depicted embodiment, the cover plate 10 extends over the entire width of the container's opening. The side wall 15 extends from the cover plate 10 slightly slanted with respect to the axis A so that the inside diameter of the cover 1 near the lower rim of the side wall 15 is bigger than the one near the cover plate 10. In this embodiment, the fastening element 150 is a latch that can be mated with a corresponding latch of the container 4. At the first port 11, the first membrane 2 is arranged on the inside of the cover plate 10, extending over the entire diameter of the through channel 110. The first membrane 2 is disk-shaped and is pressed against a circumferential rim of the through channel 110 of the first port 11, located at the inside of the cover plate 10. A second port 12 is formed in the cover plate 10 adjacent to the first port 11. The second port 12 comprising a through channel 120 that extends over the whole thickness of the cover plate 10. On the outside of the cover 1, a collar 121 extends from the cover plate 10 towards the outside, said collar 121 being formed integrally with the cover plate 10. The outside surface and the inside surface of the collar 121 are tapered as such that the outside diameter of the collar is getting smaller with an increasing distance from the cover plate 10 and the inside diameter of the collar is getting bigger with an increasing distance from the cover plate 10. On the inside of the collar 121, a shoulder is formed, wherein the surface of the shoulder is flush with the outside surface of the cover plate 10. There is a third port 13 arranged adjacent to the first port 11, opposite to the second port 12. The third port 13 comprising a through channel 130 that extends over the entire thickness of the cover plate 10. On the outside of the cover 1, a collar 131 extends from the cover plate 10 towards the outside, said collar 131 being part of a pipe that extends through the cover plate 10. The pipe extends over the inside surface of the cover plate 10, forming a circumferential rim. On the outside surface of the collar 131 of the third port 13, a thread 132 is formed integrally with the collar 131. The third port 13 can be compatible with a Luer-lock-system. On the inside of the cover 1 a holding plate 16 is arranged, fixing the first membrane 2 and the second membrane 3 to the inside of the cover plate 10. The first membrane 2 is arranged in a recess 1600 of the holding plate 16. The second membrane 3 is an annular disc, essentially covering the inside surface of the cover plate 10. There is a cut-out in the second membrane 3, in the region of the third port 13.

Figure 7 shows a section view of the holding plate 16 of Figures 5 and 6. The holding plate 16 is disk-shaped and comprises a centric first through channel 160, a second through channel 161 adjacent to it and a third through channel 162 adjacent to the first through channel 160, opposite to the second through channel 161. On the side of the holding plate 16 fading the cover plate 10, a recess in the form of a shoulder 1600 is formed the circumference of the first through channel 160. On the same side of the holding plate 16, a funnel-shaped cut-out 1610 is formed at the circumference of the second through channel 161. On the opposite side of the holding plate 16, an aspiration tube 14 is formed integrally with the holding plate 16, extending away from the holding plate 16 in the direction of the axis A.

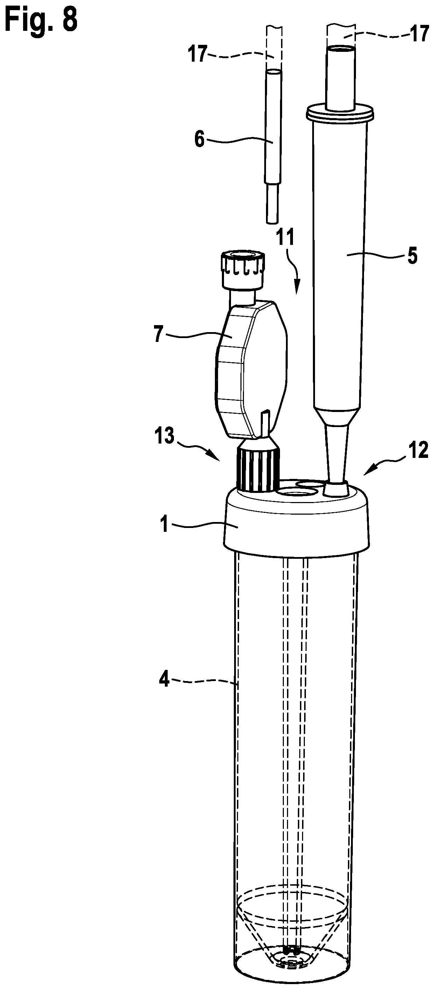

Figure 8 shows a perspective view from above of the cover 1 of Figure 1 with an aspirator 6 arranged above the first port 11, with dispenser 5 arranged at the second port 12 and with a filter 7 arranged at the third port 13 wherein the aspirator 6 is an aspiration needle and the dispenser 5 is a pipette. The filter 7 is screwed to the cover 1 at the third port 13. The aspirator 6 is fluidly connected to a liquid handling device 17, as well as the dispenser 5. In each case, a pipette of a liquid handling device 17 is indicated by dashed lines.

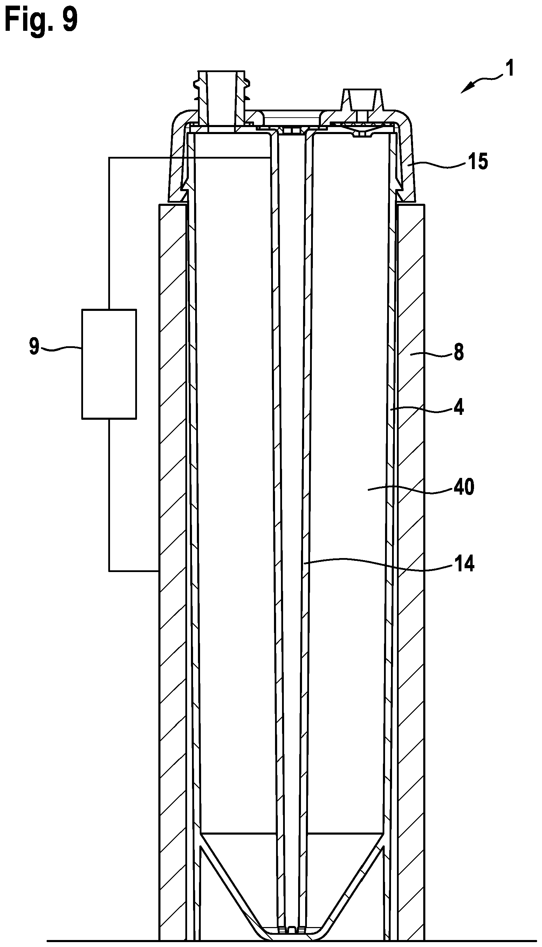

Figure 9 shows a section view of the cover 1 of Figure 1 on a container 4, arranged in a reception 8. The container 4 being inserted into the reception 8 up to the cover 1, just below the lower rim of the side wall 15. The aspiration tube 14 is electro conductively connected to an evaluation unit 9, which is also electro conductively connected to the reception 8. The aspiration tube 14 represents the first electrode and the reception 8 represents the counter electrode. The liquid volume in the container can be determined by the evaluation unit 9 based on the measured electric capacitance between the aspiration tube 14 and the reception.

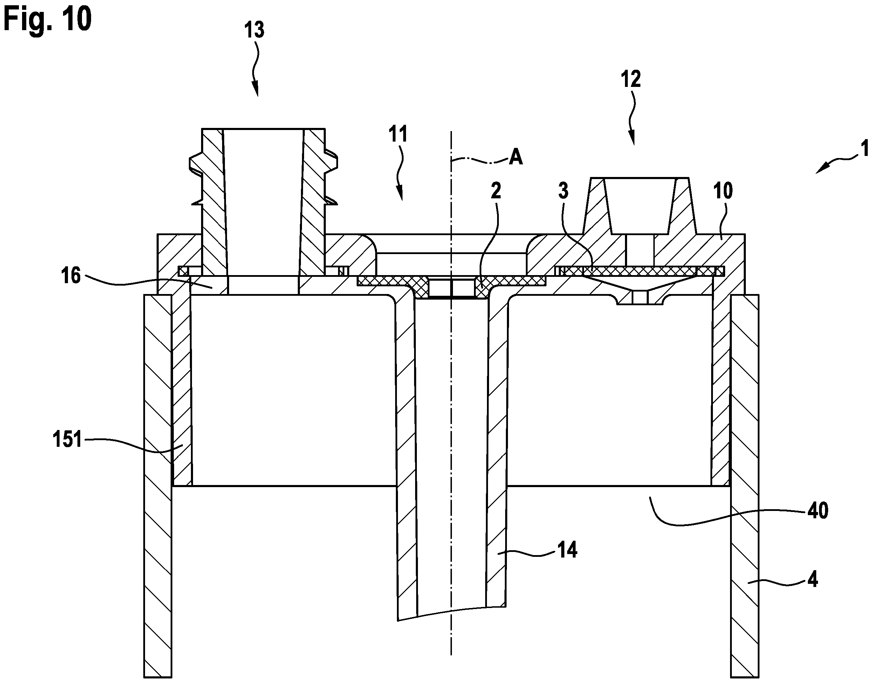

Figure 10 shows a section view of a plug-type cover 1 through its first port 11, its second port 12 and its third port 13. The depicted cover is a plug-type cover that is adapted to be plugged into the opening of a container 4. In contrast to the cap-type cover of Figures 1 and 3 to 6, the side wall 151 of the plug-type cover, in the assembled state, is arranged on the inside of the container 1, i.e. in a chamber 40 of the container. The outside surface of the side wall 151 of the cover 1 matches the inside surface of the chamber 40 of the container 4. Apart from the side wall, the plug-type cover is identical to the cap-type cover.

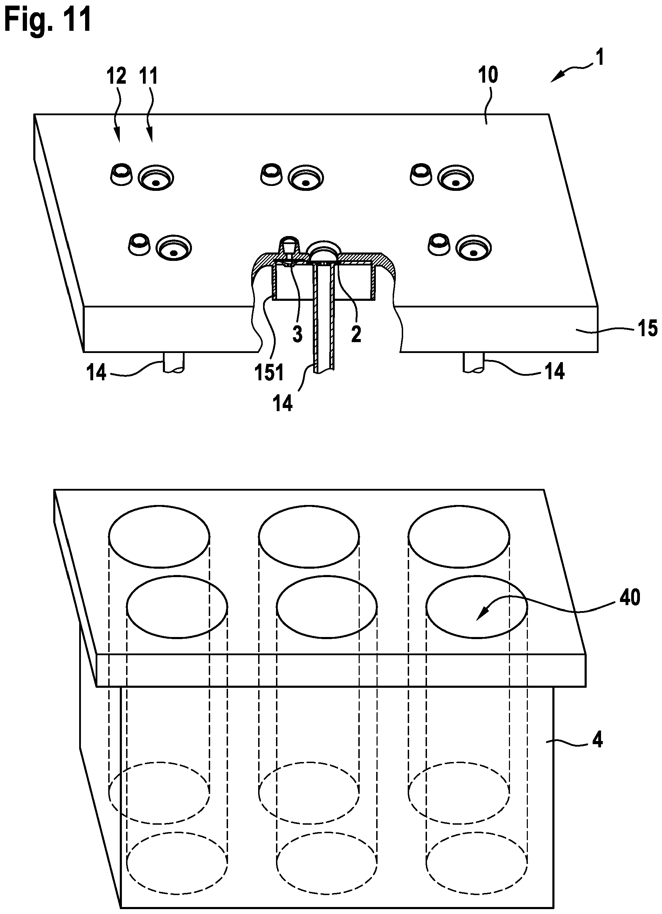

Figure 11 shows a perspective explosion view from above of a container 4 with a plurality of chambers 40 with a corresponding cover 1. Depicted is a multi-well plate 4 with six wells 40. Alternatively, a rack can be used, in which a plurality of containers can be arranged. In both embodiments, a multi cover as shown in Figure 11 can be used to cover tightly all of the chambers of the container or containers. Such a cover 1 comprises a common cover plate 10, wherein a plurality of first ports 11 with first membranes 2 and a plurality of second ports 12 with second membranes 3 are arranged as such that in the assembled state, the ports 11,12 are aligned with the corresponding chambers 40. Around each group of ports, corresponding to a chamber, on the inside surface of the cover plate 10, a side wall 151 extends away from the cover plate 10 into each chamber. Thus, all chambers are sealed-off from one another. Of course, all embodiments in connection with the cap-type cover can be realized as well with the multi cover **1.** Instead of having the side wall 151, it would be possible to have a sealing ridge, extending from the cover plate. In this case, the sealing can take place in the opening region, i.e. the opening edge of each chamber or the sealing can take place on the common top surface of all chambers.

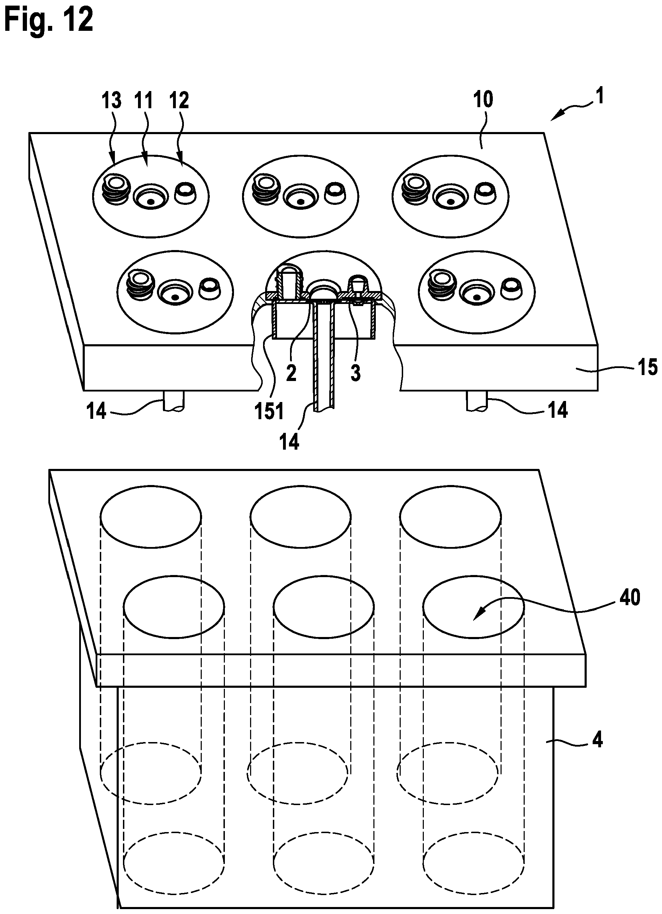

Figure 12 shows a perspective explosion view from above of a container 4 with a plurality of chambers 40 with an alternative embodiment of the cover 1 as it is shown in Figure 11. In this embodiment, the cover comprises in addition to the plurality of first ports 11 and second ports 12 a plurality of additional third ports 13. In this case, the third ports 13 comprise in each case a collar 131 with a thread 132 for connecting for example via the Luer-lock system a sterile filter, for example.

It may be provided that a plurality of chambers 40 are connected with functionally specific covers 1 to generate a type of micro-bioreactor as mentioned above. It may for example be provided that the ports and membranes of each of the covers 1 differ to provide a specific reaction sequence, and to provide a functionally adapted fluid connection in the desired sequence.

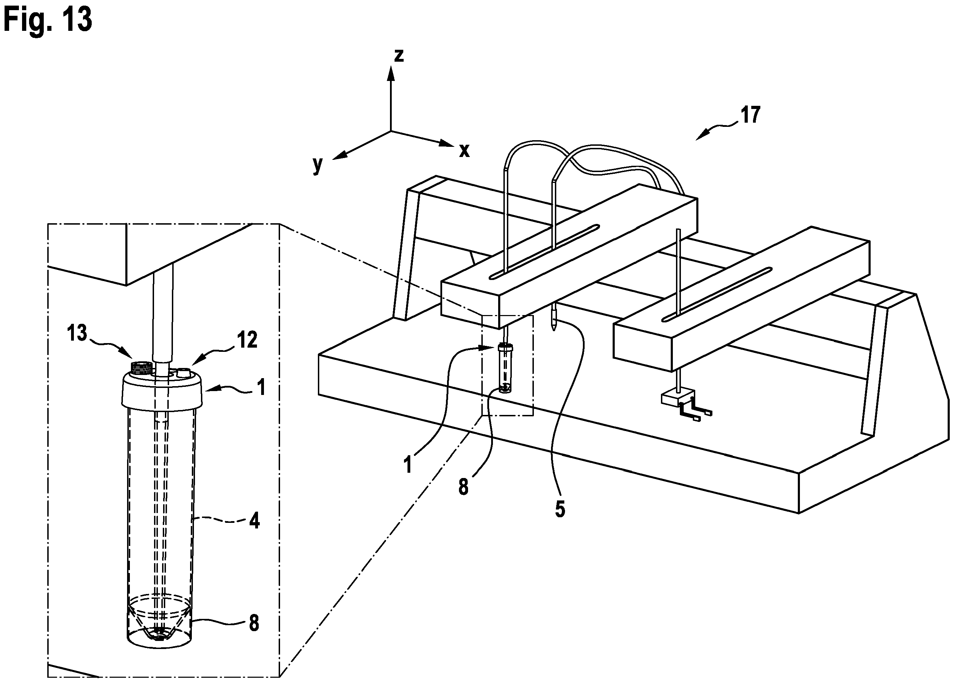

Figure 13 shows a perspective view of a liquid handling device 17 functionally connected to a fluid container 4 by a corresponding cover 1. A pipette tip, for example an aspirator or a dispenser, is inserted through the cover 1 into an aspiration tube 14 (dashed lines in the inner of the fluid container 4). The cover 1 here further comprises a second port 12 and a third port 13, the third port 13 comprising a part of a Luer-lock system. The fluid container 4 is placed here into a reception 8. It may be provided that the reception 8 is configured as an electroconductive hollow cylinder, as for example shown in Figure 9. The fluid container 4 with the reception 8 is positioned on a work surface of the liquid handling device 17. The dispenser 5 and/or an aspirator 6 are movably connected along an y-direction and along an z-direction to a movable pipetting head, which in turn is movable along an x-direction (see left arm of liquid handling device 17). On the right side of the liquid handling device 17, a gripping arm is shown which is movable along the x-direction. In this case, the gripping arm has two gripping fingers which may be movable along an y-direction and a z-direction.

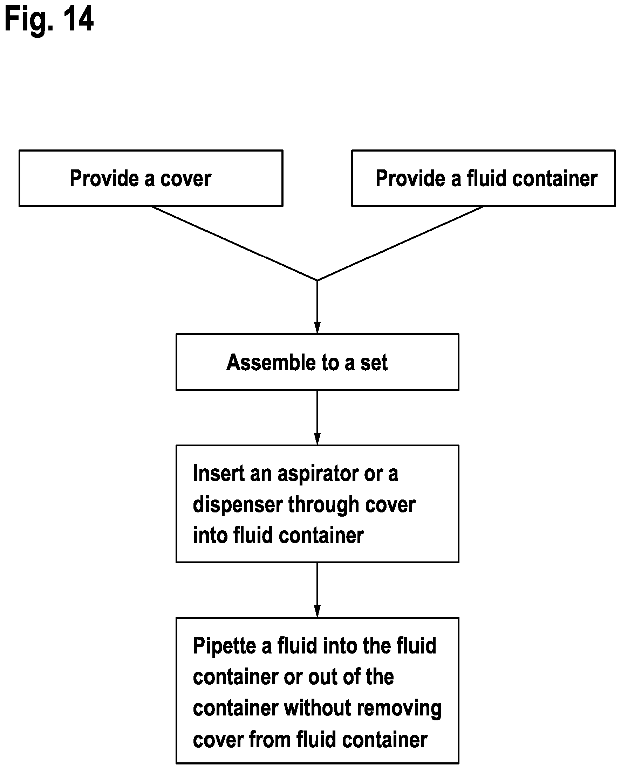

Figure 14 shows a schematic diagram of method steps of pipetting a fluid as it may be carried out using a cover according to the invention. The cover may be adapted to the desired method steps which shall be carried out in in the fluid container. Adaptation may concern for example the number and size and type of the ports and associated membranes, presence of an aspiration tube, configuration of the aspiration tube concerning material, length, or position within the fluid container, etc. The cover and the fluid container are assembled to form a set as described above. Afterwards, an aspirator or a dispenser, for example a pipette tip, is inserted into the container through a first or through a third port of the cover, and the fluid may then be pipetted out of the container or into the container.

### REFERENCE SIGNS LIST

| | | | |
|---|---|---|---|
| 1 | cover | 161 | through channel |
| 10 | cover plate | 1610 | funnel |
| 11 | first port | 162 | through channel |
| 110 | through channel | 2 | first membrane |
| 111 | shoulder | 3 | second membrane |
| 12 | second port | 30 | second membrane |
| 120 | through channel | 4 | fluid container |
| 121 | collar | 40 | chamber |
| 13 | third port | 5 | dispenser |
| 130 | through channel | 6 | aspirator |
| 131 | collar | 7 | filter |
| 132 | thread | 8 | reception |
| 14 | aspiration tube | 9 | evaluation unit |
| 140 | recess | 17 | liquid handling device |
| 15 | side wall | | |
| 150 | fastening element | A | |
| 151 | side wall | | axis |
| 16 | holding plate | P | plane |
| 160 | through channel | | |
| 1600 | shoulder | | |

## Claims

1. A cover (1) for a fluid container (4) comprising an essentially plane cover plate (10) for closing at least one opening of at least one fluid container (4) and at least two ports (11,12), wherein each port (11,12) comprises a through channel (110,120) extending through the entire thickness of the cover plate (10), wherein a fluid impermeable first membrane (2) is arranged over the entire cross section of the through channel (110) of the first port (11) and in that an at least gas permeable second membrane (3;30) is arranged over the entire cross section of the through channel (120) of the second port (12), **characterized in that** the cover comprises:
- a holding plate (16) which is arranged on the inner side of the cover plate (10), wherein the first and/or second membranes (2,3;30) are clamped between the cover plate (10) and the holding plate (16) and wherein the holding plate (16) comprises through channels (160,161,162) that are aligned with the corresponding through channels (110,120,130) of the cover plate (10), and
- an aspiration tube (14) which is provided on a side of the holding plate (16) facing away from the cover plate (10), extending from the holding plate (16), forming an extension of the through channel (160) of the holding plate (16) that is aligned with the through channel (110) of the first port (11) of the cover plate (10).

2. The cover (1) according to claim 1, wherein the second membrane (30) is permeable for gas and liquid.

3. The cover (1) according to claim 1 or 2, wherein a collar (121) is provided on the circumference of the second port (12) on an outer side of the cover plate (10), extending essentially perpendicular to the cover plate (10).

4. The cover (1) according to claim 3, comprising a fastening element provided on the exterior surface of the collar (121) of the second port (12).

5. The cover (1) according to one of the preceding claims, comprising a third port (13) with a through channel (130), extending through the entire thickness of the cover plate (10), wherein the third port (13) is membrane-free.

6. The cover (1) according to claim 5, wherein a collar (131) is provided on the circumference of the third port (13) on an outer side of the cover plate (10), extending essentially perpendicular to the cover plate (10).

7. The cover (1) according to claim 6, comprising a fastening element provided on the exterior surface of the collar (131) of the third port (13).

8. The cover (1) according to one of the preceding claims, wherein the diameter of each through channel (160,161,162) of the holding plate (16) is the same size as or is smaller than the corresponding diameter of the through channel (110,120,130) of the cover plate (10).

9. The cover (1) according to one of the preceding claims, wherein a shoulder (1600) is formed in the through channel (160) of the holding plate (16), on a channel end which is facing the cover plate (10).

10. The cover (1) according to one of the preceding claims, wherein a funnel (1610) is formed in the through channel (161) of the holding plate (16) that is aligned with the through channel (120) of the second port (12) of the cover plate (10), on a channel end which is facing the cover plate (10).

11. The cover (1) according to one of the preceding claims, wherein at least one recess (140) is formed in the aspiration tube (14) on its free end facing away from the holding plate (16).

12. The cover (1) according to one of the preceding claims, comprising a closed side wall (15;151) which extends a multiple of the thickness of the cover plate (10) from the circumference of the cover plate (10).

13. The cover (1) according to claim 12, comprising a fastening element (150) provided on the inward facing surface of the side wall (15).

14. The cover (1) according to one of the preceding claims, comprising one first port (11) and two or more second ports (12), wherein the two or more second ports (12) are identical or different.

15. The cover (1) according to claim 14, wherein a gas permeable second membrane (3) is arranged in at least one of the second ports (12) and wherein a gas and liquid permeable second membrane (30) is arranged in at least one of the second ports (12).

16. The cover (1) according to one of the preceding claims, wherein several first ports (11) and several second ports (12) and/or several third ports (13) are arranged on a common cover plate (10).

17. A set comprising a cover (1) according to one of the preceding claims and at least one fluid container (4), wherein the cover (1) is arranged as such that it completely covers at least one opening of the at least one fluid container (4).

18. A filling quantity measurement arrangement comprising a reception (8), a fluid container (4) with a cover (1) according to one of claims 1 to 16 and an evaluation unit (9), wherein the aspiration tube (14) of the cover (1) reaches into the container (4), wherein the evaluation unit (9) is electro conductively connected to the aspiration tube (14) and the reception (8), and wherein the evaluation unit (9) is adapted to determine the filling quantity in the container (4) based on the measured capacitance between the reception (8) and the aspiration tube (14).

19. A method for determining the filling quantity of a fluid container (4), comprising the steps of:
- providing a reception (8) for a non-conductive fluid container (4) and an evaluation unit (9) that is electro conductively connected to the reception (8);
- arranging a non-conductive fluid container (4) in the reception (8), wherein a cover (1) according to one of claims 12 to 16 is arranged on the fluid container (4), wherein the aspiration tube (14) of the cover (1) reaches into the container (4);
- connecting electro conductively the evaluation unit (9) with the aspiration tube (14);
- measuring the capacitance between the reception (8) and the aspiration tube (14);
- determining the filling quantity of the fluid container (4) by evaluating the measured capacitance.

20. A method of pipetting a fluid, comprising the following steps:
- providing a cover (1) according to one of the claims 1 to 16 and at least one fluid container (4), wherein the cover (1) is arranged as such that it completely covers at least one opening of the at least one fluid container (4),
- inserting an aspirator (6) or a dispenser (5) into the at least one fluid container (4) by piercing the fluid-impermeable first membrane (2) and inserting the aspirator (6) or a dispenser (5) into the aspiration tube (14), and
- pipetting a fluid into the fluid container (4) or out of the fluid container (4) using the aspirator (6) or the dispenser (5) without removing the cover (1) from the at least one fluid container (4).

21. The method according to claim 20, wherein the fluid is dispensed into the fluid container (4) using a second port (12) or a third port (13), and/or wherein the fluid is aspirated from the fluid container (4) using the first port (11) and/or the third port (13).

22. The method according to claim20 or 21, wherein the aspirator (6) is selected from a group comprising a fixed pipette tip and a disposable pipette tip, and wherein the dispenser (5) is selected from a group comprising a fixed pipette tip and a disposable pipette tip.

23. The method according to one of the claims 20 to 22, wherein the pipetting of a fluid is under the control of liquid handling device (17), the liquid handling device (17) being selected from a group comprising an automated liquid handling workstation and a handheld pipette.

## Patentansprüche

1. Ein Deckel (1) für einen Fluidbehälter (4), umfassend eine im Wesentlichen ebene Deckelplatte (10) zum Verschließen mindestens einer Öffnung von mindestens einem Fluidbehälter (4) und mindestens zwei Anschlüsse (11,12), wobei jeder Anschluss (11,12) einen Durchgangskanal (110, 120) umfasst, der sich durch die gesamte Dicke der Deckelplatte (10) erstreckt, wobei eine fluidundurchlässige erste Membran (2) über dem gesamten Querschnitt des Durchgangskanals (110) des ersten Anschlusses (11) angeordnet ist und eine mindestens gasdurchlässige zweite Membran (3;30) über dem gesamten Querschnitt des Durchgangskanals (120) des zweiten Anschlusses (12) angeordnet ist,
**dadurch gekennzeichnet, dass** der Deckel Folgendes umfasst:
- eine Halteplatte (16), die auf der Innenseite der Deckelplatte (10) angeordnet ist, wobei die erste und/oder die zweite Membran (2,3;30) zwischen die Deckelplatte (10) und die Halteplatte (16) geklemmt sind und wobei die Halteplatte (16) Durchgangskanäle (160,161,162) umfasst, die mit den entsprechenden Durchgangskanälen (110,120,130) der Deckelplatte (10) ausgerichtet sind, und
- ein Aspirationsrohr (14), das an einer Seite der Halteplatte (16) bereitgestellt ist, die von der Deckelplatte (10) abgewandt ist, und das sich von der Halteplatte (16) erstreckt und eine Verlängerung des Durchgangskanals (160) der Halteplatte (16) bildet, die mit dem Durchgangskanal (110) des ersten Anschlusses (11) der Deckelplatte (10) ausgerichtet ist.

2. Der Deckel (1) nach Anspruch 1, wobei die zweite Membran (30) für Gas und Flüssigkeit durchlässig ist.

3. Der Deckel (1) nach Anspruch 1 oder 2, wobei an einer Außenseite der Deckelplatte (10) ein Kragen (121) an dem Umfang des zweiten Anschlusses (12) bereitgestellt ist, der sich im Wesentlichen senkrecht zu der Deckelplatte (10) erstreckt.

4. Der Deckel (1) nach Anspruch 3, umfassend ein Befestigungselement, das an der äußeren Oberfläche des Kragens (121) des zweiten Anschlusses (12) bereitgestellt ist.

5. Der Deckel (1) nach einem der vorhergehenden Ansprüche, umfassend einen dritten Anschluss (13) mit einem Durchgangskanal (130), der sich durch die gesamte Dicke der Deckelplatte (10) erstreckt, wobei der dritte Anschluss (13) membranfrei ist.

6. Der Deckel (1) nach Anspruch 5, wobei an einer Außenseite der Deckelplatte (10) ein Kragen (131) an dem Umfang des dritten Anschlusses (13) bereitgestellt ist, der sich im Wesentlichen senkreckt zu der Deckelplatte (10) erstreckt.

7. Der Deckel (1) nach Anspruch 6, umfassend ein Befestigungselement, das an der äußeren Oberfläche des Kragens (131) des dritten Anschlusses (13) bereitgestellt ist.

8. Der Deckel (1) nach einem der vorhergehenden Ansprüche, wobei der Durchmesser jedes Durchgangskanals (160,161,162) der Halteplatte (16) die gleiche Größe hat oder kleiner ist als der entsprechende Durchmesser des Durchgangskanals (110,120,130) der Deckelplatte (10).

9. Der Deckel (1) nach einem der vorhergehenden Ansprüche, wobei auf einem Kanalende, das der Deckelplatte (10) zugewandt ist, eine Schulter (1600) in dem Durchgangskanal (160) der Halteplatte (16) ausgebildet ist.

10. Der Deckel (1) nach einem der vorhergehenden Ansprüche, wobei auf einem Kanalende, das der Deckelplatte (10) zugewandt ist, ein Trichter (1610) in dem Durchgangskanal (161) der Halteplatte (16) ausgebildet ist, der mit dem Durchgangskanal (120) des zweiten Anschlusses (12) der Deckelplatte (10) ausgerichtet ist.

11. Der Deckel (1) nach einem der vorhergehenden Ansprüche, wobei auf dem freien Ende des Aspirationsrohrs (14), das von der Halteplatte (16) abgewandt ist, mindestens eine Aussparung (140) ausgebildet ist.

12. Der Deckel (1) nach einem der vorhergehenden Ansprüche, umfassend eine geschlossene Seitenwand (15;151), die sich über ein Vielfaches der Dicke der Deckelplatte (10) von dem Umfang der Deckelplatte (10) erstreckt.

13. Der Deckel (1) nach Anspruch 12, umfassend ein Befestigungselement (150), das an der nach innen gewandten Oberfläche der Seitenwand (15) bereitgestellt ist.

14. Der Deckel (1) nach einem der vorhergehenden Ansprüche, umfassend einen ersten Anschluss (11) und zwei oder mehr zweite Anschlüsse (12), wobei die zwei oder mehr zweiten Anschlüsse (12) identisch oder unterschiedlich sind.

15. Der Deckel (1) nach Anspruch 14, wobei eine gasdurchlässige zweite Membran (3) in mindestens einem der zweiten Anschlüsse (12) angeordnet ist und wobei eine gas- und flüssigkeitsdurchlässige zweite Membran (30) in mindestens einem der zweiten Anschlüsse (12) angeordnet ist.

16. Der Deckel (1) nach einem der vorhergehenden Ansprüche, wobei mehrere erste Anschlüsse (11) und mehrere zweite Anschlüsse (12) und/oder mehrere dritte Anschlüsse (13) auf einer gemeinsamen Deckelplatte (10) angeordnet sind.

17. Ein Set, umfassend einen Deckel (1) nach einem der vorhergehenden Ansprüche und mindestens einen Fluidbehälter (4), wobei der Deckel (1) derart angeordnet ist, dass er mindestens eine Öffnung des mindestens einen Fluidbehälters (4) vollständig abdeckt.

18. Eine Füllmengenmessanordnung, umfassend eine Aufnahme (8), einen Fluidbehälter (4) mit einem Deckel (1) nach einem der Ansprüche 1 bis 16 und eine Bewertungseinheit (9), wobei das Aspirationsrohr (14) des Deckels (1) in den Behälter (4) reicht, wobei die Bewertungseinheit (9) elektrisch leitend mit dem Aspirationsrohr (14) und der Aufnahme (8) verbunden ist und wobei die Bewertungseinheit (9) dazu ausgelegt ist, die Füllmenge in dem Behälter (4) basierend auf der gemessenen Kapazität zwischen der Aufnahme (8) und dem Aspirationsrohr (14) zu bestimmen.

19. Ein Verfahren zum Bestimmen der Füllmenge eines Fluidbehälters (4), umfassend die Schritte:
- Bereitstellen einer Aufnahme (8) für einen nichtleitenden Fluidbehälter (4) und eine Bewertungseinheit (9), die elektrisch leitend mit der Aufnahme (8) verbunden ist;
- Anordnen eines nichtleitenden Fluidbehälters (4) in der Aufnahme (8), wobei ein Deckel (1) nach einem der Ansprüche 12 bis 16 auf dem Fluidbehälter (4) angeordnet ist, wobei das Aspirationsrohr (14) des Deckels (1) in den Behälter (4) reicht;
- Verbinden, in elektrisch leitender Weise, der Bewertungseinheit (9) mit dem Aspirationsrohr (14);
- Messen der Kapazität zwischen der Aufnahme (8) und dem Aspirationsrohr (14);
- Bestimmen der Füllmenge des Fluidbehälters (4) durch Bewerten der gemessenen Kapazität.

20. Ein Verfahren zum Pipettieren eines Fluids, umfassend die folgenden Schritte:
- Bereitstellen eines Deckels (1) nach einem der Ansprüche 1 bis 16 und mindestens eines Fluidbehälters (4), wobei der Deckel (1) derart angeordnet ist, dass er mindestens eine Öffnung des mindestens einen Fluidbehälters (4) vollständig abdeckt,
- Einführen eines Aspirators (6) oder eines Spenders (5) in den mindestens einen Fluidbehälter (4) durch Durchstechen der fluidundurchlässigen ersten Membran (2) und Einführen des Aspirators (6) oder eines Spenders (5) in das Aspirationsrohr (14) und
- Pipettieren eines Fluids in den Fluidbehälter (4) oder aus dem Fluidbehälter (4) heraus unter Verwendung des Aspirators (6) oder des Spenders (5), ohne den Deckel (1) von dem mindestens einen Fluidbehälter (4) zu entfernen.

21. Das Verfahren nach Anspruch 20, wobei das Fluid unter Verwendung eines zweiten Anschlusses (12) oder eines dritten Anschlusses (13) in den Fluidbehälter (4) abgegeben wird und/oder wobei das Fluid unter Verwendung des ersten Anschlusses (11) und/oder des dritten Anschlusses (13) aus dem Fluidbehälter (4) aspiriert wird.

22. Das Verfahren nach Anspruch 20 oder 21, wobei der Aspirator (6) ausgewählt ist aus einer Gruppe umfassend eine fixierte Pipettenspitze und eine Einweg-Pipettenspitze und wobei der Spender (5) ausgewählt ist aus einer Gruppe umfassend eine fixierte Pipettenspitze und eine Einweg-Pipettenspitze.

23. Das Verfahren nach einem der Ansprüche 20 bis 22, wobei das Pipettieren eines Fluids durch eine Flüssigkeitshandhabungseinrichtung (17) gesteuert wird, wobei die Flüssigkeitshandhabungseinrichtung (17) ausgewählt ist aus einer Gruppe umfassend eine automatisierte Flüssigkeitshandhabungsarbeitsstation und eine in der Hand gehaltene Pipette.

## Revendications

1. Un couvercle (1) pour un récipient de fluide (4) comprenant une plaque de couverture essentiellementplane (10) pour fermer au moins une ouverture d'au moins un récipient de fluide (4) et au moins deux orifices (11,12), dans lequel chaque orifice (11,12) comprend un canal traversant (110,120) s'étendant à travers toute l'épaisseur de la plaque de couverture (10), dans lequel une première membrane imperméable aux fluides (2) est arrangée sur toute la section transversale du canal traversant (110) du premier orifice (11) et en ce qu'une seconde membrane au moins perméable aux gaz (3;30) est arrangée sur toute la section transversale du canal traversant (120) du deuxième orifice (12), **caractérisé en ce que** le couvercle comprend :
- une plaque de maintien (16) qui est arrangée sur le côté interne de la plaque de couverture (10), dans lequel les première et/ou seconde membranes (2,3;30) sont serrées entre la plaque de couverture (10) et la plaque de maintien (16) et dans lequel la plaque de maintien (16) comprend des canaux traversants (160,161,162) qui sont alignés avec les canaux traversants correspondants (110,120,130) de la plaque de couverture (10), et
- un tube d'aspiration (14) qui est disposé sur un côté de la plaque de maintien (16) orienté à l'opposé de la plaque de couverture (10), s'étendant à partir de la plaque de maintien (16), formant une extension du canal traversant (160) de la plaque de maintien (16) qui est alignée avec le canal traversant (110) du premier orifice (11) de la plaque de couverture (10).

2. Le couvercle (1) selon la revendication 1, dans lequel la seconde membrane (30) est perméable aux gaz et aux liquides.

3. Le couvercle (1) selon la revendication 1 ou 2, dans lequel un collier (121) est fourni sur la circonférence du deuxième orifice (12) sur un côté externe de la plaque de couverture (10), s'étendant essentiellement perpendiculairement à la plaque de couverture (10).

4. Le couvercle (1) selon la revendication 3, comprenant un élément de fixation fourni sur la surface extérieure du collier (121) du deuxième orifice (12).

5. Le couvercle (1) selon l'une des revendications précédentes, comprenant un troisième orifice (13) avec un canal traversant (130), s'étendant à travers toute l'épaisseur de la plaque de couverture (10), dans lequel le troisième orifice (13) est exempt de membrane.

6. Le couvercle (1) selon la revendication 5, dans lequel un collier (131) est fourni sur la circonférence du troisième orifice (13) sur un côté externe de la plaque de couverture (10), s'étendant essentiellement perpendiculairement à la plaque de couverture (10).

7. Le couvercle (1) selon la revendication 6, comprenant un élément de fixation fourni sur la surface extérieure du collier (131) du troisième orifice (13).

8. Le couvercle (1) selon l'une des revendications précédentes, dans lequel le diamètre de chaque canal traversant (160,161,162) de la plaque de maintien (16) est de la même taille ou est plus petit que le diamètre correspondant du canal traversant (110,120,130) de la plaque de couverture (10).

9. Le couvercle (1) selon l'une des revendications précédentes, dans lequel un épaulement (1600) est formé dans le canal traversant (160) de la plaque de maintien (16), sur une fin de canal qui est orientée vers la plaque de couverture (10).

10. Le couvercle (1) selon l'une des revendications précédentes, dans lequel un entonnoir (1610) est formé dans le canal traversant (161) de la plaque de maintien (16) qui est aligné avec le canal traversant (120) du deuxième orifice (12) de la plaque de couverture (10), sur une fin de canal qui est orientée vers la plaque de couverture (10).

11. Le couvercle (1) selon l'une des revendications précédentes, dans lequel au moins un évidement (140) est formé dans le tube d'aspiration (14) sur son fin libre orientée à l'opposé de la plaque de maintien (16).

12. Le couvercle (1) selon l'une des revendications précédentes, comprenant une paroi latérale fermée (15 ; 151) qui s'étend sur un multiple de l'épaisseur de la plaque de couverture (10) à partir de la circonférence de la plaque de couverture (10).

13. Le couvercle (1) selon la revendication 12, comprenant un élément de fixation (150) fourni sur la surface de la paroi latérale (15) orientée vers l'intérieur.

14. Le couvercle (1) selon l'une des revendications précédentes, comprenant un premier orifice (11) et deux ou plus de deux deuxièmes orifices (12), dans lequel les deux ou plus de deux deuxièmes orifices (12) sont identiques ou différents.

15. Le couvercle (1) selon la revendication 14, dans lequel une seconde membrane perméable aux gaz (3) est arrangée dans au moins l'un des deuxièmes orifices (12) et dans lequel une seconde membrane perméable aux gaz et aux liquides (30) est arrangée dans au moins l'un des deuxièmes orifices (12).

16. Le couvercle (1) selon l'une des revendications précédentes, dans lequel plusieurs premiers orifices (11) et plusieurs deuxièmes orifices (12) et/ou plusieurs troisièmes orifices (13) sont arrangés sur une plaque de couverture commune (10).

17. Un ensemble comprenant un couvercle (1) selon l'une des revendications précédentes et au moins un récipient de fluide (4), dans lequel le couvercle (1) est arrangé de sorte qu'il recouvre complètement au moins une ouverture de l'au moins un récipient de fluide (4).

18. Un agencement de mesure de quantité de remplissage comprenant un logement (8), un récipient de fluide (4) avec un couvercle (1) selon l'une des revendications 1 à 16 et une unité d'évaluation (9), dans lequel le tube d'aspiration (14) du couvercle (1) pénètre dans le récipient (4), dans lequel l'unité d'évaluation (9) est connectée de manière électro-conductrice au tube d'aspiration (14) et au logement (8), et dans lequel l'unité d'évaluation (9) est conçue pour déterminer la quantité de remplissage dans le récipient (4) sur la base de la capacitance mesurée entre le logement (8) et le tube d'aspiration (14).

19. Un procédé de détermination de la quantité de remplissage d'un récipient de fluide (4), comprenant les étapes de :
- fourniture d'un logement (8) pour un récipient de fluide non conducteur (4) et d'une unité d'évaluation (9) qui est connectée de manière électro-conductrice au logement (8);
- agencement d'un récipient de fluide non conducteur (4) dans le logement (8), dans lequel un couvercle (1) selon l'une des revendications 12 à 16est arrangé sur le récipient de fluide (4),
dans lequel le tube d'aspiration (14) du couvercle (1) pénètre dans le récipient (4) ;
- connexion électro-conductrice de l'unité d'évaluation (9) au tube d'aspiration (14) ;
- mesure de la capacitance entre le logement (8) et le tube d'aspiration (14) ;
- détermination de la quantité de remplissage du récipient de fluide (4) en évaluant la capacitance mesurée.

20. Un procédé de pipetage d'un fluide, comprenant les étapes suivantes :
- la fourniture d'un couvercle (1) selon l'une des revendications 1 à 16 et d'au moins un récipient de fluide (4), dans lequel le couvercle (1) est arrangé de sorte qu'il recouvre complètement au moins une ouverture de l'au moins un récipient de fluide (4),
- l'insertion d'un aspirateur (6) ou d'un distributeur (5) dans l'au moins un récipient de fluide (4) en perçant la première membrane imperméable aux fluides (2) et en insérant l'aspirateur (6) ou un distributeur (5) dans le tube d'aspiration (14), et
- le pipetage d'un fluide dans le récipient de fluide (4) ou hors du récipient de fluide (4) à l'aide de l'aspirateur (6) ou du distributeur (5) sans retirer le couvercle (1) de l'au moins un récipient de fluide (4).

21. Le procédé selon la revendication 20, dans lequel le fluide est distribué dans le récipient de fluide (4) à l'aide d'un deuxième orifice (12) ou d'un troisième orifice (13), et/ou dans lequel le fluide est aspiré du récipient de fluide (4) à l'aide du premier orifice (11) et/ou du troisième orifice (13).

22. Le procédé selon la revendication 20 ou 21, dans lequel l'aspirateur (6) est choisi parmi un groupe comprenant une pointe de pipette fixe et une pointe de pipette jetable, et dans lequel le distributeur (5) est choisi parmi un groupe comprenant une pointe de pipette fixe et une pointe de pipette jetable.

23. Le procédé selon l'une des revendications 20 à 22, dans lequel le pipetage d'un fluide est sous la commande d'un dispositif de manipulation de liquide (17), le dispositif de manipulation de liquide (17) étant choisi parmi un groupe comprenant un poste de travail de manipulation de liquide automatisé et une pipette portative.
